# EUROPEAN PATENT SPECIFICATION

(11) **EP 2 011 821 B1**
(45) Date of publication and mention of the grant of the patent: **30.12.2009**
(21) Application number: 07111730.3
(22) Date of filing: 04.07.2007
(51) Int. Cl.: C08K 5/3492, C08K 3/00

(54) **High temperature vulcanized silicone rubber**
Hochtemperaturvulkanisiertes Silikongummi
Caoutchouc en silicone vulcanisé à haute température

(43) Date of publication of application: 07.01.2009
(73) Proprietor: ABB Research Ltd., 8050 Zürich (CH)
(72) Inventor: Schmidt, Lars, CH-8048, Zürich (CH); Mattozzi, Alessandro, S-11354, Stockholm (SE); Krivda, Andrej, CH-5430, Wettingen (CH); Hillborg, Henrik, S-72210, Västeras (SE); Saj, Pitor, PL-31-980, Krakow (PL); Kornmann, Xavier, Dr., D-79787, Lauchringen (DE)
(74) Representative: Ingold, Mathias

(56) References cited:
- US-A- 3 813 364
- US-A1- 2006 019 105
- HAN D H ET AL: "Effects of alumina trihydrate on the electrical insulation properties of HTV silicone rubber" PROCEEDINGS OF THE 7TH. INTERNATIONAL CONFERENCE ON PROPERTIES AND APPLICATIONS OF DIELECTRIC MATERIALS. NAGOYA, JAPAN, JUNE 1 - 5, 2003, PROCEEDINGS OF THE INTERNATIONAL CONFERENCE ON PROPERTIES AND APPLICATIONS OF DIELECTRIC MATERIALS, NEW YORK, NY, vol. VOL.3 OF 3 CONF. 7, 1 June 2003 (2003-06-01), pages 381-384, XP010649136 ISBN: 0-7803-7725-7
- KUMAGAI S ET AL: "Tracking and erosion of HTV silicone rubber and suppression mechanism of ATH" IEEE TRANS DIELECTR ELECTR INSUL; IEEE TRANSACTIONS ON DIELECTRICS AND ELECTRICAL INSULATION APRIL 2001, vol. 8, no. 2, April 2001 (2001-04), pages 203-211, XP002459347

## Description

The present invention refers to high temperature vulcanized silicone rubber (HTV-SR) with improved tracking and erosion resistance. The present invention refers specifically to a high temperature vulcanized polydimethylsiloxane (HTV-PDMS) with improved tracking and erosion resistance.

High temperature vulcanizing silicone rubber(HTV-SR) and specifically high temperature vulcanized polydimethylsiloxanes (HTV-PDMS) are widely used in the electrical engineering industry, especially for outdoor insulation, due to their good surface properties and the capability to recover hydrophobicity.

However, particularly in outdoor and wet environment often erosion patterns are observed on the rubber surface, whereby the electrical conductivity within said pattern is considerably increased due to discharge degradation. Said electrically conductive path is generally called track. Tracks reduce the insulation strength and may lead to flashover or dielectric breakdown.

As a result tracking-resistant polymer systems have been developed for the use as outdoor high-voltage insulation. A preferred example is high temperature vulcanized polydimethylsiloxane (HTV-PDMS) filled with alumina trihydrate [(ATH), (Al₂O₃.3H₂O)] containing generally about 30 to 70% by weight of ATH, calculated to the total weight of the insulation material [or 43 parts (phr) to 230 parts (phr) of ATH per 100 part of SR]. Such a material is often used to produce outdoor high-voltage insulation systems. Aluminium hydroxide [Al(OH)₃] is often referred to as alumina trihydrate (ATH) because chemically (Al₂O_{3.}3H₂O) corresponds to 2[Al(OH)₃] but the term "ATH" is generally used in the field of polymeric outdoor insulation.

Testing the tracking resistance of various commercial high temperature vulcanized silicone rubber (HTV-SR) and various commercial high temperature vulcanized polydimethylsiloxane (HTV-PDMS) according to IEC (International Electrotechnical Commission) standard 60587 at 4.5 kV revealed that these materials often failed during testing, showing deep erosion and a layer-wise degradation, resulting in a dielectric breakdown in the IEC 60587 tracking test. The degradation mechanism was found to be complicated, as temperatures of above 1200°C (>1200°C) and even higher than 1600°C (>1600°C) may arise during surface discharge. Therefore, there is a need to improve the tracking and erosion resistance of filler containing HTV-SR.

It has now been found that HTV-SR and especially HTV-PMDS show an improved tracking and erosion resistance without loss of mechanical properties when said high temperature vulcanized silicone rubber (HTV-SR) comprises a high temperature vulcanized silicone rubber (HTV-SR) as a silicone base and melamine cyanurate as a filler material, whereby said composition may optionally contain further filler materials and additives.

The present invention is defined in the claims. The present invention refers to a high temperature vulcanized silicone rubber (HTV-SR) with improved tracking and erosion resistance, characterized in that said high temperature vulcanized silicone rubber comprises a high temperature vulcanized silicone rubber as a silicone base and melamine cyanurate as a filler and at least one inorganic filler which is different from melamine cyanurate, and optionally further additives; wherein the total filler content is within the range of 40 parts (by weight) to 230 parts (by weight) per 100 parts (by weight) of silicone base; and wherein
(i) the melamine cyanurate is present within the range of 2 parts (by weight) to 40 parts (by weight) per 100 parts (by weight) of silicone base; and
(ii) the at least one inorganic filler which is different from melamine cyanurate is selected from inorganic fillers known to be used in the field of electrical insulations.

The total filler content is preferably within the range of 65 parts (by weight) to 150 parts (by weight) per 100 parts (by weight) of silicone base.

The melamine cyanurate is present preferably within the range of 3 parts (by weight) to 30 parts (by weight) per 100 parts (by weight) of silicone base, preferably within the range of 5 parts (by weight) to 20 parts (by weight) per 100 parts (by weight) of silicone base, preferably within the range of 10 parts (by weight) to 20 parts (by weight) per 100 parts (by weight) of silicone base.

The high temperature vulcanized silicone rubber (HTV-SR) is preferably a high temperature vulcanized polydimethylsiloxane (HTV-PDMS). High temperature vulcanized silicone rubbers (HTV-SR) are generally composed of cross-linked groups of [-(R₁R₂)Si-O-], [-(R₁)Si(-O-)₂] with terminating groups [(R₁R₂R₃)Si-O-], wherein R₁, R₂ and R₃ are optionally substituted methyl or phenyl, preferably methyl or phenyl, preferably methyl. The bridging [=Si-O-Si≡]-group may be replaced by a group of the formula [≡Si-CH₂-CH₂-Si≡] or [≡Si-CH₂-CH₂-CH₂-Si≡], depending on the cross-linking mechanism and/or the starting materials chosen. Such high temperature vulcanized silicone rubbers (HTV-SR) and high temperature vulcanized polydimethylsiloxanes (HTV-PDMS) as used in the production of electrical isolation systems are known to the expert in the art and need no further detailed description.

The at least one inorganic filler which is different from melamine cyanurate is selected from inorganic fillers known to be used in the field of electrical insulations and is preferably selected from the group comprising alumina trihydrate (ATH) and silica. Each of said filler may be used alone or as a mixture with each other or another inorganic filler. If ATH and silica are used together as a mixture, then the ratio of ATH : silica is preferably 15:95 to 25:75, and the content of melamine cyanurate is preferably within the range of 10% to 40% by weight, calculated to the sum of ATH and silica, preferably within the range of 15% to 30% by weight calculated to the sum of ATH and silica.

If the filler material consists of melamine cyanurate and silica, then the ratio of melamine cyanurate : silica is preferably 40:60 to 2:98, preferably 30:70 to 5:95, and preferably 20:80 to 5:95 and the content of the optional ATH is up to 10% by weight, preferably up to 5% by weight, calculated to the sum of silica and melamine cyanurate. The filler material preferably does not contain any ATH.

Alumina trihydrate corresponds to the chemical formula [Al₂O₃.3H₂O], silica to [SiO_{2]} as mentioned above. Melamine cyanurate is defined as [CAS-No. 37640-57-6].

Average grain sizes and specific surface areas (BET) of the filler material as used in the present invention are known in the art. Such filler material is commercially available. The filler material may be surface treated resp. surface modified in a manner known per se, for example with silazanes, such as hexamethylsilazane or divinyltetramethyldisilazane or with vinylalkoxysilanes, such as vinyltrimethoxysilan, or for example with alkoxysilanes or siloxandiols.

Further optional additives are known per se and are for example inhibitors resp. stabilizers, flame retardants, or colors and pigments.

The high temperature vulcanized silicone rubber (HTV-SR) according to the present invention is made from a hardenable liquid or pasteous silicone resin composition. Preferably said hardenable liquid or pasteous silicone resin composition is a mixture of organopolysiloxanes, preferably a mixture of compounds of the general formula (I): 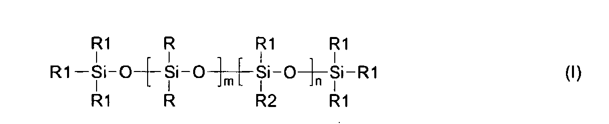 wherein
- R: independent of each other is (C₁₋₄)-alkyl which optionally is substituted by chlorine and/or bromine or phenyl; preferably methyl, ethyl, propyl, 3,3,3-trifluoropropyl, monofluoromethyl, oder difluoromethyl; preferably methyl;
- R₁: independent of each other has one of the meanings of R or R₂, or is -O-Alkyl(C₁-C₄) or hydroxyl;
- R₂: independent of each other has one of the meaning of R, or is hydrogen, or a residue of the formula: -(A)ᵣ-CH=CH₂;
- A: is a residue -CₛH₂ₛ-, preferably -(CH₂)ₛ-, wherein
- s: is a whole number from 1 to 3, preferably 1;
- r: is zero or one;
- m: is a number within the range of 500 to 20'000, preferably within the range of 1000 to 15'000, preferably within the range of 4'000 to 10'000; and
- n: is a number within the range of zero to 500, preferably zero or within the range of 2 to 100, preferably zero or a number within the range of 2 to 20; and
wherein the groups -[Si(R)(R)O]- und -[Si(R₁)(R₂)O]- are ordered in an arbitrary sequence.

Preferably R₂ has one of the meanings given for R, wherein R preferably is methyl or phenyl, wherein the molecule contains methyl as well as phenyl residues. The ratio of methyl to phenyl is given by the required flowability of the mixture and the properties required in the hardened product. Preferably R is methyl. The compound of formula (I) generally is a mixture of homologous compounds of formula (I) which is known to the expert. Preferably at least a part of the substituents R₁ has the meaning of -O-Alkyl(C₁-C₄) or hydroxyl or of -(A)ᵣ-CH=CH₂.

The mixture of the silicone compounds my be hardened by adding a trialkoxysilane of the formula [(C₁₋₄)Alkyl]₄₋ₓSi[O-Alkyl(C₁₋₄)]ₓ, wherein x is 1 to 4, preferably 1, 2 or 3, preferably 3; for example methyltrimethoxysilane, methyltriethoxysilane and similar compounds; compounds of the formula [(C₂-C₄)Alkenyl]₄₋ₓSi[O-Alkyl(C₁-C₄)]ₓ, wherein x is 1 to 4, preferably 1, 2 or 3, preferably 3, such as vinyltrimethoysilane or allyltrimethoysilane, (phenyl)Si[O-alkyl(C₁-C₄)]; or a silane of the formula [(C₁-C₄)Alkyl]SiH₃ or similar low molecular hydrogensiloxanes. It is also possible to use peroxide compounds, such as diacylperoxide, dialkylperoxide and other peroxides known per se to harden the siloxane mixture. Generally elevated temperatures are used for the hardening process, which yield a high temperature vulcanized silicone rubber (HTV-SR) as required by the present invention.

In an embodiment of the present invention R₂ is hydrogen as well as -A-CH=CH₂, wherein R₂ per molecule either stands for hydrogen only or for -A-CH=CH₂ only. The compound wherein R₂ is hydrogen and the compound wherein R₂ is -A-CH=CH₂, are stored separately to avoid any interaction. The compounds are mixed shortly before hardening the mixture. Both compounds are mixed in equimolar amounts and are then hardened resp. vulcanized. Preferably a molar excess of about 2 to 5% of the Si-H-groups is used with respect to the component containing the -A-CH=CH₂ substituent. Further a catalyst is preferably used, preferably a complex made from a metal selected from rhodium, nickel, palladium and/or platin, in an amount of preferably 1 to 100 ppm calculated to the metal bound in the complex. Such catalytically active compounds and the silicon compounds of formula (I) to be used are known per se and have been described in the literature.

The filler composition optionally comprises further fillers which may partially or wholly replace the preferred inorganic filler which is different from melamine cyanurate. Such filler may be selected from the group comprising glass powder, metal oxides such magnesium oxide, titanium oxide; metal nitrides, such as silicon nitride, boron nitride and aluminium nitride; metal carbides, such as silicon carbide; ground natural and synthetic minerals mainly silicates, such as talcum, glimmer, kaolin, wollastonite, bentonite; calcium silicates such as xonolit [Ca₂Si₆O₁₇(OH)₂]; aluminium silicates such as andalusite [Al₂O₃.SiO₂] or zeolithe; Aluminumoxide [Al₂O₃]; and known calcium/magnesium silicates, in different powder sizes. Preferred fillers are aluminum trihydrate and silicon dioxide as described herein above.

The present invention refers also to a hardenable silicone rubber resin, wherein said hardenable silicone rubber comprises a hardenable silicone rubber as a silicone base preferably comprising a mixture of compounds of formula (I) and melamine cyanurate as a filler and at least one inorganic filler which is different from melamine cyanurate, and optionally further additives; wherein the total filler content is within the range of 40 parts (by weight) to 230 parts (by weight) per 100 parts (by weight) of silicone base; and wherein
(i) the melamine cyanurate is present within the range of 2 parts (by weight) to 40 parts (by weight) per 100 parts (by weight) of silicone base; and
(ii) the at least one inorganic filler which is different from melamine cyanurate is selected from inorganic fillers known to be used in the field of electrical insulations. For the given values the preferred values as given above in this specification are also valid.

The present invention also refers to hardenable silicone rubber resin, containing a mixture of compounds of formula (I) in the form of a two-component system, wherein one component contains a mixture of compounds of formula (I) wherein R₂ is hydrogen and the other component contains a mixture of compounds of formula (I) wherein R₂ is -A-CH=CH₂; as defined above; said resin being hardenable after mixing of the two components and after addition of a catalyst as defined above.

The present invention also refers to a method of making the high temperature vulcanized silicone rubber with improved tracking and erosion resistance according to the present invention, characterized in that the components of the hardenable mixture, i.e. the silicone compounds of formula (I), the filler material as defined above, the catalyst as defined above, and any optional additives, are mixed in any desired sequence and are heated to a temperature within the range of 100°C to 150°C, preferably within the range of 120°C to 140°C, for a time long enough to cause complete vulcanization of the composition.

The present invention also refers to the use of the hardenable silicone rubber resin, as defined above, for the production of shaped articles in the field of electrical isolators, specifically in the field of high voltage isolators, especially for outdoor use.

The present invention also refers to the shaped articles in the field of electrical isolators, specifically in the field of high voltage isolators, especially for outdoor use, as made according to the present invention.

The following examples illustrate the invention without restricting the scope of the description and claims.

### Examples

The components as give in Table 1 are dispersed in the silicone base by either using a duplex kneader, a two-roll mill or a combination of both. The homogeneous formulation is then molded and cured at an elevated temperature, chosen on the basis of the peroxide or platinum compound. After remolding, a post-curing step is possible, but not necessary. For the described examples curing was carried out for 30 minutes at 130°C and post-curing for 4 hours at 150°C.

Table 1 shows an exemplary Formulation A and compares this Formulation A with two commercial References 1 and 2. Table 2 lists their properties. Composition of proposed formulations, i.e. filler, additive and curing agent content, is given in phr (parts per hundred) with respect to the silicone base.

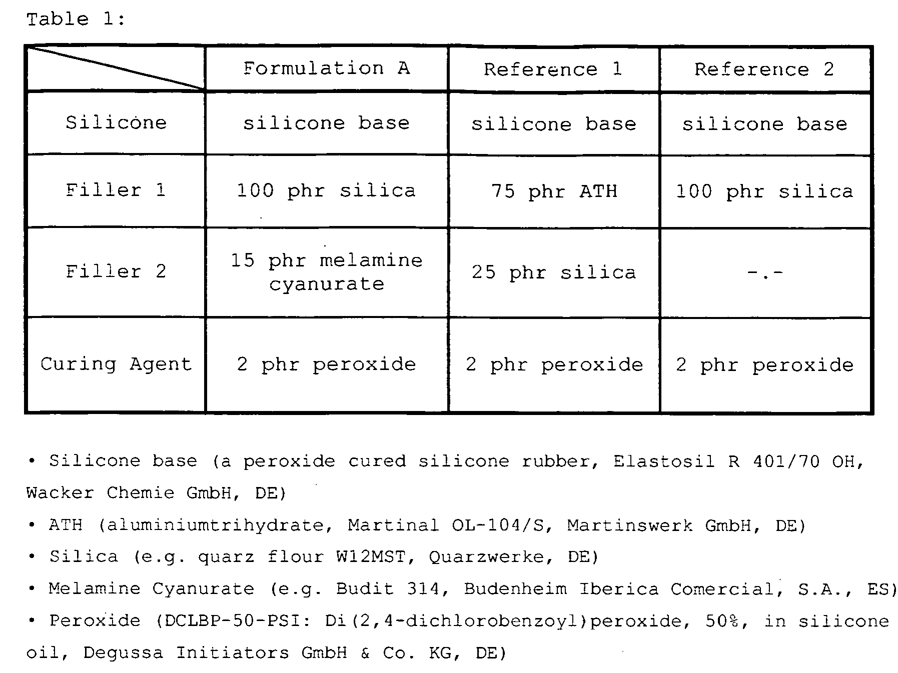

Formulations containing the above mentioned components were compared to the Reference, which is the commercially available HTV silicone rubber Dow Corning HV 1660/65.

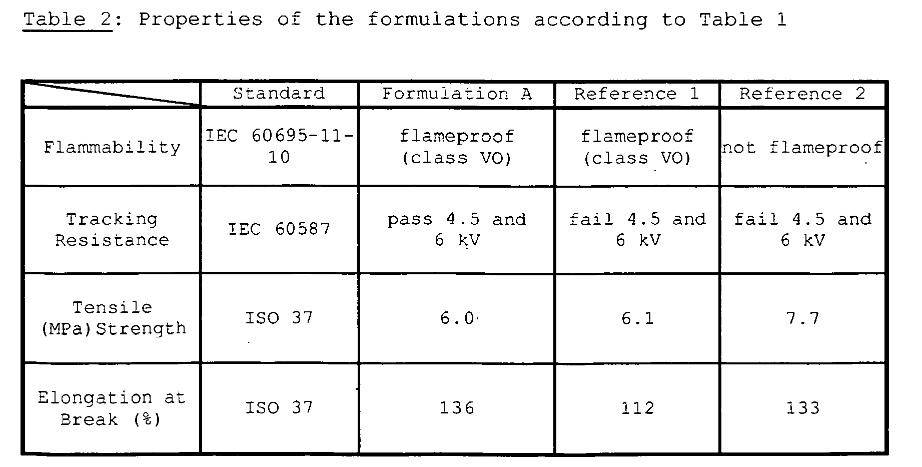

### Comparison between formulation A and the Reference 1:

The introduction of melamine cyanurate and removal of ATH leads to an improvement of the tracking resistance without deteriorating mechanical properties or flame retardancy. Furthermore the cost of the material is reduced by 20%.

### Comparison between formulation A and the Reference 2:

The introduction of melamine cyanurate leads to and an improvement of the tracking resistance and flame retardancy without deteriorating mechanical properties.

Analogous results are obtained when silica (100 phr silica) in Formulation A is replaced by a mixture of silica and ATH in a weight ration of silica : ATH = 80:20.

## Claims

1. High temperature vulcanized silicone rubber with improved tracking and erosion resistance, **characterized in that** said high temperature vulcanized silicone rubber comprises a high temperature vulcanized silicone rubber as a silicone base and melamine cyanurate as a filler and at least one inorganic filler which is different from melamine cyanurate, and optionally further additives; wherein the total filler content is within the range of 40 parts (by weight) to 230 parts (by weight) per 100 parts (by weight) of silicone base; and wherein
(i) the melamine·cyanurate is present within the range of 2 parts (by weight) to 40 parts (by weight) per 100 parts (by weight) of silicone base; and
(ii) the at least one inorganic filler which is different from melamine cyanurate is selected from inorganic fillers known to be used in the field of electrical insulations.

2. Silicone rubber according to claim 1, **characterized in that** the total filler content is within the range of 65 parts (by weight) to 150 parts (by weight) per 100 parts (by weight) of silicone base.

3. Silicone rubber according to one of the claims 1 or 2, **characterized in that** the melamine cyanurate is present within the range of 3 parts (by weight) to 30 parts (by weight) per 100 parts (by weight) of silicone base, preferably within the range of 5 parts (by weight) to 20 parts (by weight) per 100 parts (by weight) of silicone base, preferably within the range of 10 parts (by weight) to 20 parts (by weight) per 100 parts (by weight) of silicone base.

4. Silicone rubber according to any one of the claims 1-3, **characterized in that** said high temperature vulcanized silicone rubber is a high temperature vulcanized polydimethylsiloxane composed of cross-linked groups of [-(R₁R₂)Si-O-], [-(R₁)Si(-O-)₂] with terminating groups [(R₁R₂R.)Si-O-], wherein R₁, R₂ and R₃ are optionally substituted methyl or phenyl, preferably methyl or phenyl, preferably methyl.

5. Silicone rubber according to claim 4, **characterized in that** the bridging ≡Si-O-Si≡]-group is replaced by a group of the formula [≡Si-CH, -CH, -Si≡] or [≡Si-CH₂-CH₂-CH₂-Si≡].

6. Silicone rubber according to any one of the claims 1-5, **characterized in that** the at least one inorganic filler which is different from melamine cyanurate is selected from the group comprising alumina trihydrate (ATH) and silica.

7. Silicone rubber according to claim 6, **characterized in that** ATH and silica are used together, and the ratio of ATH : silica is 15:95 to 25:75, wherin the content of melamine cyanurate preferably is within the range of 10% to 40% by weight, calculated to the sum of ATH and silica, preferably within the range of 15% to 30% by weight calculated to the sum of ATH and silica.

8. Silicone rubber according to any one of the claims 1-5, **characterized in that** the filler material consists of melamine cyanurate and silica, and the ratio of melamine cyanurate : silica is 40:60 to 2:98, preferably 30:70 to 5:95, and preferably 20:80 to 5:95 and the content of the optional ATH is up to 10% by weight, preferably up to 5% by weight, calculated to the sum of silica and melamine cyanurate.

9. Silicone rubber according to any one of the claims 1-8, **characterized in that** the filler material is surface treated, preferably with silazanes, preferably hexamethylsilazane or divinyltetramethyldisilazane; or with vinylalkoxysilanes, preferably vinyltrimethoxysilan, or with alkoxysilanes or siloxandiols.

10. Silicone rubber according to any one of the claims 1-9, **characterized in that** said composition further contains additives selcteted from the group comprising stabilizers, flame retardants, colors and pigments.

11. Silicone rubber according to any one of the claims 1-10, **characterized in that** said hardenable liquid or pasteous silicone resin base composition is a mixture of organopolysiloxanes, preferably a mixture of compounds of the general formula (I): 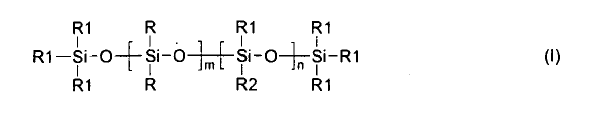 wherein
R independent of each other is (C₁₋₄)-alkyl which optionally is substituted by chlorine and/or bromine or phenyl; preferably methyl, ethyl, propyl, 3,3,3-trifluoropropyl, monofluoromethyl, oder difluoromethyl; preferably methyl;
R₁ independent of each other has one of the meanings of R or R₂, or is -O-Alkyl(C₁-C₄) or hydroxyl;
R₂ independent of each other has one of the meaning of R, or is hydrogen, or a residue of the formula: -(A)ᵣ-CH=CH₂;
A is a residue -CₛH₂ₛ- , preferably -(CH₂)ₛ- , wherein
s is a whole number from 1 to 3, preferably 1;
r is zero or one;
m is a number within the range of 500 to 20'000, preferably within the range of 1000 to 15'000, preferably within the range of 4'000 to 10'000; and
n is a number within the range of zero to 500, preferably zero or within the range of 2 to 100, preferably zero or a number within the range of 2 to 20; and
wherein the groups -[Si (R) (R) 0]- und -[Si(R₁)(R₂)O]- are ordered in an arbitrary sequence.

12. Silicone rubber according to any claim 11, **characterized in that** R₂ has one of the meanings given for R, wherein R preferably is methyl or phenyl, preferably methyl.

13. Silicone rubber according to any one of the claims 1-12, **characterized in that** the filler composition optionally comprises further fillers which may partially or wholly replace the at least one inorganic filler which is different from melamine cyanurate which preferably are selected from the group comprising glass powder, metal oxides, metal nitrides, metal carbides, ground natural and synthetic minerals, calcium silicates.

14. Hardenable silicone rubber resin, **characterized in that** said hardenable silicone rubber comprises a hardenable silicone rubber as a silicone base comprising a mixture of compounds of formula (I) as defined in claim 11, and melamine cyanurate as a filler and at least one inorganic filler which is different from melamine cyanurate, and optionally further additives; wherein the total filler content is within the range of 40 parts (by weight) to 230 parts (by weight) per 100 parts (by weight) of silicone base; and wherein
(i) the melamine cyanurate is present within the range of 2 parts (by weight) to 40 parts (by weight) per 100 parts (by weight) of silicone base; and
(ii) the at least one inorganic filler which is different from melamine cyanurate is selected from inorganic fillers known to be used in the field of electrical insulations.

15. Hardenable silicone rubber resin according to claim 14, **characterized in that** said composition contains a mixture of compounds of formula (I), in the form of a two-component system, wherein one component contains a mixture of compounds of formula (I) wherein R₂ is hydrogen and the other component contains a mixture of compounds of formula (I) wherein R₂ is -A-CH=CH₂, as defined in claim 11, said resin being hardenable after mixing of the two components and after addition of a catalyst as defined above.

16. Method of making the high temperature vulcanized silicone rubber with improved tracking and erosion resistance according to any on of the claims 1-13, **characterized in that** the components of the hardenable mixture according to one of the claims 14 or 15, are mixed in any desired sequence and are heated to a temperature within the range of 100°C to 150°C, preferably within the range of 120°C to 140°C, for a time long enough to cause complete vulcanization of the composition.

17. The use of the hardenable silicone rubber resin according to one of the claims 14 or 15, for the production of shaped articles in the field of electrical isolators, specifically in the field of high voltage isolators, especially for outdoor use.

18. Shaped articles in the field of electrical isolators, specifically in the field of high voltage isolators, especially for outdoor use, comprising a silicone rubber insulation material according to any one of the claims 1-13.

## Patentansprüche

1. Hochtemperaturvulkanisierter Silikonkautschuk mit verbesserter Kriechstrom- und Erosionsfestigkeit, **dadurch gekennzeichnet, daß** der hochtemperaturvulkanisierte Silikonkautschuk einen hochtemperaturvulkanisierten Silikonkautschuk als Silikongrundlage und Melamincyanurat als Füllstoff und mindestens einen anorganischen Füllstoff, der von Melamincyanurat verschieden ist, und gegebenenfalls weitere Additive umfaßt; wobei der Füllstoff-Gesamtgehalt im Bereich von 40 Gewichtsteilen bis 230 Gewichtsteilen pro 100 Gewichtsteile Silikongrundlage liegt und wobei
(i) das Melamincyanurat im Bereich von 2 Gewichtsteilen bis 40 Gewichtsteilen pro 100 Gewichtsteile Silikongrundlage vorliegt und
(ii) der mindestens eine anorganische Füllstoff, der von Melamincyanurat verschieden ist, aus anorganischen Füllstoffen, die bekanntlich auf dem Gebiet elektrischer Isolierungen verwendet werden, ausgewählt ist.

2. Silikonkautschuk nach Anspruch 1, **dadurch gekennzeichnet, daß** der Füllstoff-Gesamtgehalt im Bereich von 65 Gewichtsteilen bis 150 Gewichtsteilen pro 100 Gewichtsteile Silikongrundlage liegt.

3. Silikonkautschuk nach einem der Ansprüche 1 oder 2, **dadurch gekennzeichnet, daß** das Melamincyanurat im Bereich von 3 Gewichtsteilen bis 30 Gewichtsteilen pro 100 Gewichtsteile Silikongrundlage, vorzugsweise im Bereich von 5 Gewichtsteilen bis 20 Gewichtsteilen pro 100 Gewichtsteile Silikongrundlage, vorzugsweise im Bereich von 10 Gewichtsteilen bis 20 Gewichtsteilen pro 100 Gewichtsteile Silikongrundlage, vorliegt.

4. Silikonkautschuk nach einem der Ansprüche 1-3, **dadurch gekennzeichnet, daß** es sich bei dem hochtemperaturvulkanisierten Silikonkautschuk um ein hochtemperaturvulkanisiertes Polydimethylsiloxan, handelt, das aus vernetzten Gruppen von [-(R₁R₂)Si-O-], [-(R₁)Si(-O-)₂] mit Endgruppen [-(R₁R₂R₃)Si-O-], besteht, worin R₁, R₂ und R₃ für gegebenenfalls substituiertes Methyl oder Phenyl, vorzugsweise Methyl oder Phenyl, vorzugsweise Methyl, stehen.

5. Silikonkautschuk nach Anspruch 4, **dadurch gekennzeichnet, daß** die verbrückende [≡Si-O-Si≡]-Gruppe durch eine Gruppe der Formel [≡Si-CH₂-CH₂-Si≡]- oder [≡Si-CH₂-CH₂-CH₂-Si≡]- ersetzt ist.

6. Silikonkautschuk nach einem der Ansprüche 1-5, **dadurch gekennzeichnet, daß** der mindestens eine anorganische Füllstoff, der von Melamincyanurat verschieden ist, aus der Gruppe umfassend Aluminiumoxidtrihydrat (ATH) und Siliciumdioxid ausgewählt ist.

7. Silikonkautschuk nach Anspruch 6, **dadurch gekennzeichnet, daß** ATH und Siliciumdioxid zusammen verwendet werden und das Verhältnis ATH : Siliciumdioxid 15:95 bis 25:75 beträgt, wobei der Gehalt an Melamincyanurat vorzugsweise im Bereich von 10 bis 40 Gew.-%, berechnet auf die Summe von ATH und Siliciumdioxid, und vorzugsweise im Bereich von 15 bis 30 Gew.-%, berechnet auf die Summe von ATH und Siliciumdioxid, liegt.

8. Silikonkautschuk nach einem der Ansprüche 1-5, **dadurch gekennzeichnet, daß** das Füllstoffmaterial aus Melamincyanurat und Siliciumdioxid besteht und das Verhältnis Melamincyanurat : Siliciumdioxid 40:60 bis 2:98, vorzugsweise 30:70 bis 5:95 und vorzugsweise 20:80 bis 5:95 beträgt und der Gehalt des fakultativen ATH bis zu 10 Gew.-%, vorzugsweise bis zu 5 Gew.-%, berechnet auf die Summe von Melamincyanurat und Siliciumdioxid, beträgt.

9. Silikonkautschuk nach einem der Ansprüche 1-8, **dadurch gekennzeichnet, daß** das Füllstoffmaterial oberflächenbehandelt ist, vorzugsweise mit Silazanen, vorzugsweise Hexamethylsilazan oder Divinyltetramethyldisilazan; oder mit Vinylalkoxysilanen, vorzugsweise Vinyltrimethoxysilan, oder mit Alkoxysilanen oder Siloxandiolen.

10. Silikonkautschuk nach einem der Ansprüche 1-9, **dadurch gekennzeichnet, daß** die Zusammensetzung ferner Additive aus der Gruppe umfassend Stabilisatoren, Flammschutzmittel, Farbstoffen und Pigmente enthält.

11. Silikonkautschuk nach einem der Ansprüche 1-10, **dadurch gekennzeichnet, daß** es sich bei der härtbaren flüssigen oder pastösen Silikonharzgrundlagenzusammensetzung um eine Mischung von Organopolysiloxanen handelt, vorzugsweise um eine Mischung von Verbindungen der allgemeinen Formel (I): 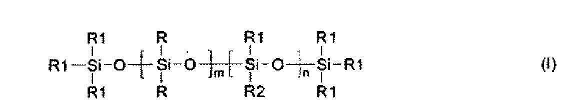 worin
R unabhängig voneinander für (C₁₋₄)-Alkyl, das gegebenenfalls durch Chlor und/oder Brom substituiert ist, oder Phenyl; vorzugsweise Methyl, Ethyl, Propyl, 3,3,3-Trifluorpropyl, Monofluormethyl oder Difluormethyl; vorzugsweise Methyl; steht;
R₁ unabhängig voneinander eine der Bedeutungen von R oder R₂ aufweist oder für -O-Alkyl (C₁-C₄) oder Hyxdroxyl steht;
R₂ unabhängig voneinander eine der Bedeutungen von R aufweist oder für einen Rest der Formel -(A)ᵣ-CH=CH₂ steht;
A für einen Rest -CₛH₂ₛ-, vorzugsweise -(CH₂) steht, worin
s eine ganze Zahl von 1 bis 3, vorzugsweise 1, ist;
r null oder eins ist;
m eine Zahl im Bereich von 500 bis 20.000, vorzugsweise im Bereich von 1000 bis 15.000, vorzugsweise im Bereich von 4.000 bis 10.000, steht und
n eine Zahl im Bereich von null bis 500, vorzugsweise null oder im Bereich von 2 bis 100, vorzugsweise null oder eine Zahl im Bereich von 2 bis 20, ist; und
wobei die Gruppen -[Si(R)(R)O]- und -[Si(R₁)(R₂)O]- in beliebiger Reihenfolge angeordnet sind.

12. Silikonkautschuk nach Anspruch 11, **dadurch gekennzeichnet, daß** R₂ eine der für R angegebenen Bedeutungen besitzt, wobei R vorzugsweise für Methyl oder Phenyl, vorzugsweise Methyl, steht.

13. Silikonkautschuk nach einem der Ansprüche 1-12, **dadurch gekennzeichnet, daß** die Füllstoffzusammensetzung gegebenenfalls ferner Füllstoffe umfaßt, die den mindestens einen anorganischen Füllstoff, der von Melamincyanurat verschieden ist, teilweise oder ganz ersetzen können und aus der Gruppe umfassend Glaspulver, Metalloxide, Metallnitride, Metallcarbide, gemahlene natürliche und synthetische Mineralien und Calciumsilicate ausgewählt sind.

14. Härtbares Silikonkautschukharz, **dadurch gekennzeichnet, daß** der härtbare Silikonkautschuk einen härtbaren Silikonkautschuk als Silikongrundlage, umfassend eine Mischung von Verbindungen der Formel (I) gemäß Anspruch 11, und Melamin als Füllstoff und mindestens einen anorganischen Füllstoff, der von Melamincyanurat verschieden ist, und gegebenenfalls weitere Additive umfaßt, wobei der Füllstoff-Gesamtgehalt im Bereich von 40 Gewichtsteilen bis 230 Gewichtsteilen pro 100 Gewichtsteile Silikongrundlage liegt und wobei
(i) das Melamincyanurat im Bereich von 2 Gewichtsteilen bis 40 Gewichtsteilen pro 100 Gewichtsteile Silikongrundlage vorliegt und
(ii) der mindestens eine anorganische Füllstoff, der von Melamincyanurat verschieden ist, unter anorganischen Füllstoffen, die bekanntlich auf dem Gebiet elektrischer Isolierungen verwendet werden, ausgewählt ist.

15. Härtbares Silikonkautschukharz nach Anspruch 14, **dadurch gekennzeichnet, daß** die Zusammensetzung eine Mischung von Verbindungen der Formel (I) in Form eines Zweikomponentensystems enthält, wobei eine Komponente eine Mischung von Verbindungen der Formel (I), worin R₂ für Wasserstoff steht, und die andere Komponente eine Mischung von Verbindungen der Formel (I), worin R₂ für A-CH=CH₂ gemäß der in Anspruch 11 angegebenen Definition steht, enthält, wobei das Harz nach Mischen der beiden Komponenten und nach Zugabe eines Katalysators gemäß obiger Definition härtbar ist.

16. Verfahren zur Herstellung des hochtemperaturvulkanisierten Silikonkautschuks mit verbesserter Kriechstrom- und Erosionsfestigkeit nach einem der Ansprüche 1-13, **dadurch gekennzeichnet, daß** man die Komponenten der härtbaren Mischung nach einem der Ansprüche 14 oder 15 in einer beliebigen gewünschten Reihenfolge mischt und auf eine Temperatur im Bereich von 100°C bis 150°C, vorzugsweise im Bereich von 120°C bis 140°C, über einen zur Bewirkung von vollständiger Vulkanisierung der Zusammensetzung ausreichenden Zeitraum erhitzt.

17. Verwendung des härtbaren Silikonkautschukharzes nach einem der Ansprüche 14 oder 15 zur Herstellung von Formkörpern auf dem Gebiet elektrischer Isolatoren, insbesondere auf dem Gebiet der Hochspannungsisolatoren, speziell für den Außeneinsatz.

18. Formkörper auf dem Gebiet elektrischer Isolatoren, insbesondere auf dem Gebiet der Hochspannungsisolatoren, speziell für den Außeneinsatz, umfassend ein Silikonkautschuk-Isoliermaterial nach einem der Ansprüche 1-13.

## Revendications

1. Caoutchouc silicone vulcanisé à haute température de résistance au cheminement et à l'érosion améliorée, **caractérisé en ce que** ledit caoutchouc silicone vulcanisé à haute température comprend un caoutchouc silicone vulcanisé à haute température au titre de base siliconée, du cyanurate de mélamine au titre de charge et au moins une charge inorganique différente du cyanurate de mélamine, et éventuellement des adjuvants supplémentaires ; la teneur totale en charge étant comprise dans l'intervalle 40 parts (en masse) à 230 parts (en masse) pour 100 parts (en masse) de base siliconée ; et où
(i) le cyanurate de mélamine est compris dans l'intervalle 2 parts (en masse) à 40 parts (en masse) pour 100 parts (en masse) de base siliconée ; et
(ii) la ou les charges inorganiques différentes du cyanurate de mélamine sont sélectionnées parmi les charges inorganiques connues pour être employées dans le domaine des isolants électriques.

2. Caoutchouc silicone conforme à la revendication 1, **caractérisé en ce que** la teneur totale en charge est comprise dans l'intervalle 65 parts (en masse) à 150 parts (en masse) pour 100 parts (en masse) de base siliconée.

3. Caoutchouc silicone conforme à l'une des revendications 1 ou 2, **caractérisé en ce que** le cyanurate de mélamine est compris dans l'intervalle 3 parts (en masse) à 30 parts (en masse) pour 100 parts (en masse) de base siliconée, préférentiellement compris dans l'intervalle 5 parts (en masse) à 20 parts (en masse) pour 100 parts (en masse) de base siliconée, préférentiellement compris dans l'intervalle 10 parts (en masse) à 20 parts (en masse) pour 100 parts (en masse) de base siliconée.

4. Caoutchouc silicone conforme à l'une quelconque des revendications 1 à 3, **caractérisé en ce que** ledit caoutchouc silicone vulcanisé à haute température est un polydiméthylsiloxane vulcanisé à haute température composé de groupements réticulés [-(RiR₂)Si-O-], [-(R₁)Si(-O-)₂] avec des groupements terminaux [(R₁R₂R₃)Si-O-], où R₁, R₂ et R₃ sont des groupements méthyle ou phényle éventuellement substitués, préférentiellement des groupements méthyle ou phényle, préférentiellement des groupements méthyle.

5. Caoutchouc silicone conforme à la revendication 4, **caractérisé en ce que** le groupement pontant [≡Si-O-Si=] est remplacé par un groupement de formule [≡Si-CH₂-CH₂-Si≡] ou [≡Si-CH₂-CH₂-CH₂-Si≡].

6. Caoutchouc silicone conforme à l'une quelconque des revendications 1 à 5, **caractérisé en ce que** la ou les charges inorganiques différentes du cyanurate de mélamine sont choisies dans le groupe comprenant le trihydrate d'alumine (ATH) et la silice.

7. Caoutchouc silicone conforme à la revendication 6, **caractérisé en ce que** l'ATH et la silice sont employés ensemble, et que le rapport ATH : silice est compris entre 15 : 95 et 25 : 75, la teneur en cyanurate de mélamine étant préférentiellement comprise dans l'intervalle 10 % à 40 % en masse, calculée par rapport à la masse totale d'ATH et de silice, préférentiellement comprise dans l'intervalle 15 % à 30 % en masse, calculée par rapport à la masse totale d'ATH et de silice.

8. Caoutchouc silicone conforme à l'une quelconque des revendications 1 à 5, **caractérisé en ce que** le matériau de charge est constitué de cyanurate de mélamine et de silice, et **en ce que** le rapport cyanurate de mélamine : silice est compris entre 40 : 60 et 2 : 98, préférentiellement entre 30 : 70 et 5 : 95, et préférentiellement entre 20 : 80 et 5 : 95 et la teneur en ATH éventuel peut atteindre 10 % en masse, préférentiellement peut atteindre 5 % en masse, calculée par rapport à la masse totale de silice et de cyanurate de mélamine.

9. Caoutchouc silicone conforme à l'une quelconque des revendications 1 à 8, **caractérisé en ce que** le matériau de charge est traité en surface, préférentiellement par des silazanes, préférentiellement par de l'hexaméthylsilazane ou du divinyltétraméthyldisilazane ; ou par des vinylalkoxysilanes, préférentiellement par du vinyltriméthoxysilane, ou par des alkoxysilanes ou des siloxanediols.

10. Caoutchouc silicone conforme à l'une quelconque des revendications 1 à 9, **caractérisé en ce que** ladite composition comprend en outre des adjuvants choisis dans le groupe comprenant les stabilisants, les ignifugeants, les couleurs et les pigments.

11. Caoutchouc silicone conforme à l'une quelconque des revendications 1 à 10, **caractérisé en ce que** ledit liquide durcissable ou ladite composition à base de résine silicone pâteuse est un mélange d'organopolysiloxanes, préférentiellement un mélange de composés de formule générale (I) : 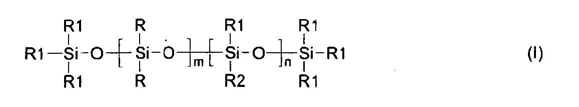 où
R représentent indépendamment les uns des autres un groupement alkyle en C₁₋₄ éventuellement substitué par un atome de chlore et/ou de brome ou un groupement phényle ; préférentiellement un groupement méthyle, éthyle, propyle, 3,3,3-trifluoropropyle, monofluorométhyle ou difluorométhyle ; préférentiellement un groupement méthyle ;
R₁ ont indépendamment les uns des autres l'une des valeurs de R ou de R₂, ou représentent un groupement -O-alkyle en C₁-C₄ ou hydroxyle ;
R₂ ont indépendamment les uns des autres l'une des valeurs de R, ou représentent un atome d'hydrogène ou un résidu de formule : -(A)ᵣ-CH=CH₂ ;
A représente un résidu -CₛH₂ₛ-, préférentiellement - (CH₂)_{S}⁻, où
s est un nombre entier compris entre 1 et 3, préférentiellement 1 ;
r est égal à zéro ou à un ;
m est un nombre compris dans l'intervalle 500 à 20 000, préférentiellement dans l'intervalle 1000 à 15 000, préférentiellement dans l'intervalle 4000 à 10 000 ; et
n est un nombre compris dans l'intervalle zéro à 500, préférentiellement zéro ou dans l'intervalle 2 à 100, préférentiellement zéro ou un nombre compris dans l'intervalle 2 à 20 ; et
où les groupements -[Si(R)(R)O]- et -[Si(R₁)(R₂)O]- sont ordonnés suivant une séquence arbitraire.

12. Caoutchouc silicone conforme à l'un quelconque des caoutchoucs silicone de la revendication 11, **caractérisé en ce que** R a l'une des valeurs de R, où R représente préférentiellement un groupement méthyle ou phényle, préférentiellement un groupement méthyle.

13. Caoutchouc silicone conforme à l'une quelconque des revendications 1 à 12, **caractérisé en ce que** la composition de charge comprend éventuellement des charges supplémentaires pouvant partiellement ou totalement remplacer la ou les charges inorganiques différentes du cyanurate de mélamine, et qui sont préférentiellement choisies dans le groupe comprenant la poudre de verre, les oxydes métalliques, les nitrures métalliques, les carbures métalliques, les minéraux naturels et synthétiques broyés, les silicates de calcium.

14. Résine de caoutchouc silicone durcissable, **caractérisée en ce que** ledit caoutchouc silicone durcissable comprend un caoutchouc silicone durcissable au titre de base siliconée constitué d'un mélange de composés de formule (I) conforme à la revendication 11, du cyanurate de mélamine au titre de charge et au moins une charge inorganique différente du cyanurate de mélamine, et éventuellement des adjuvants supplémentaires ; la teneur totale en charge étant comprise dans l'intervalle 40 parts (en masse) à 230 parts (en masse) pour 100 parts (en masse) de base siliconée ; et où
(i) le cyanurate de mélamine est compris dans l'intervalle 2 parts (en masse) à 40 parts (en masse) pour 100 parts (en masse) de base siliconée ; et
(ii) la ou les charges inorganiques différentes du cyanurate de mélamine sont sélectionnées parmi les charges inorganiques connues pour être employées dans le domaine des isolants électriques.

15. Résine de caoutchouc silicone durcissable conforme à la revendication 14, **caractérisée en ce que** ladite composition contient un mélange de composés de formule (I), sous forme d'un système bicomposant, où l'un des composants contient un mélange de composés de formule (I) où R₂ représente un atome d'hydrogène et l'autre composant contient un mélange de composés de formule (I) où R₂ représente un groupement -A-CH=CH₂, conforme à la revendication 11, ladite résine étant durcissable après mélange des deux composants et après ajout d'un catalyseur comme défini ci-avant.

16. Méthode de fabrication du caoutchouc silicone vulcanisé à haute température de résistance au cheminement et à l'érosion améliorée conforme à l'une quelconque des revendications 1 à 13, **caractérisée en ce que** les composants du mélange durcissable conforme à l'une des revendications 14 ou 15 sont mélangés dans n'importe quel ordre désiré et sont chauffés à une température comprise dans l'intervalle 100 °C à 150 °C, préférentiellement dans l'intervalle 120 °C à 140 °C, pendant une durée suffisante pour entraîner la vulcanisation totale de la composition.

17. Emploi de la résine de caoutchouc silicone durcissable conforme à l'une des revendications 14 ou 15, dans la production d'articles mis en forme dans le domaine des isolants électriques, spécifiquement dans le domaine des isolants de haute tension, spécialement pour une utilisation en extérieur.

18. Articles mis en forme dans le domaine des isolants électriques, spécifiquement dans le domaine des isolants de haute tension, spécialement pour une utilisation en extérieur, comprenant un matériau isolant en caoutchouc silicone conforme à l'une quelconque des revendications 1 à 13.
